# EUROPÄISCHE PATENTSCHRIFT

(11) **EP 2 771 561 B1**
(45) Veröffentlichungstag und Bekanntmachung des Hinweises auf die Patenterteilung: **18.11.2020**
(21) Anmeldenummer: 12753076.4
(22) Anmeldetag: 18.07.2012
(51) Int. Cl.: F02M 35/12, B29C 49/20, B29L 23/00, B29C 49/04, F16L 55/033, B29C 49/42, B29L 31/30

(54) **DÄMPFER FÜR LUFTLEITUNGEN EINES VERBRENNUNGSMOTORS MIT TURBOLADER UND VERFAHREN ZU SEINER HERSTELLUNG**
DAMPER FOR AIR LINES OF AN INTERNAL COMBUSTION ENGINE HAVING A TURBOCHARGER AND METHOD FOR PRODUCING SAID DAMPER
SILENCIEUX POUR CONDUITES D'AIR D'UN MOTEUR À COMBUSTION INTERNE DOTÉ D'UN TURBOCOMPRESSEUR ET PROCÉDÉ POUR SA FABRICATION

(30) Priorität: 28.10.2011 DE 102011085452
(43) Veröffentlichungstag der Anmeldung: 03.09.2014
(73) Patentinhaber: Umfotec GmbH, 37154 Northeim (DE); Denker, Dietrich, 73760 Ostfildern (DE)
(72) Erfinder: SCHÜTZ, Reinhard, 66271 Kleinblittersdorf (DE); LIPPKE, Paul, 36093 Künzell (DE)
(74) Vertreter: Patentanwälte Bauer Vorberg Kayser
(86) Internationale Anmeldenummer: PCT/EP2012/062055
(87) Internationale Veröffentlichungsnummer: WO 2013/060489

(56) Entgegenhaltungen:
- EP-A1- 1 944 150
- DE-A1- 19 855 708
- JP-A- 53 030 660
- JP-A- 61 083 020
- US-A- 5 762 858
- US-A1- 2011 073 406

## Beschreibung

Die Erfindung bezieht sich auf ein Verfahren zum Herstellen eines Dämpfers für eine Luftleitung eines Verbrennungsmotors und auf eine Vorrichtung für die Herstellung eines derartigen Dämpfers. Insbesondere bezieht sich die Erfindung auf eine Ladeluftleitung eines Verbrennungsmotors mit Turbolader.

Aus US 5 762 858 A ist ein Verfahren zum Herstellen eines Dämpfers für eine Luftleitung eines Verbrennungsmotors bekannt mit den folgenden Verfahrensschritten: Herstellen und Bereitstellen eines Innenteils, das Durchlässe aufweist, Erstellen eines schlauchförmigen Vorformlings eines Außenmantels aus einer thermoplastischen Schmelze, Positionieren des Innenteils an einem Halter einer Blasform, die geöffnet ist, wobei der Halter einen Luftkanal aufweist, der mit den Durchlässen kommuniziert, Aufbringen des temperierten Vorformlings über das Innenteil, Schließen der Blasform und Aufblasen des Vorformlings gegen die Wände der Blasform, wodurch ein Außenmantel erhalten wird und stellenweises Andrücken von Vorformling und Innenteil gegeneinander, Öffnen der Blasform und Entfernen des Dämpfers. Aus US 5 762 858 A ist schließlich eine Vorrichtung zur Herstellung eines Dämpfers für eine Luftleitung eines Verbrennungsmotors bekannt, die eine Blasform aufweist, welche in einen geöffneten und in einen geschlossenen Zustand gebracht werden kann, wobei die Blasform einen Halter aufweist, der einen Luftkanal und eine mit diesem verbundene Austrittsöffnung aufweist.

Dämpfer der hier in Rede stehenden Art werden auch als Dämmer und als Resonatoren bezeichnet. Zum Stand der Technik wird nur beispielhaft auf die DE 198 55 708 B4, DE 10 2008 032 491 A1 und DE 10 2010 042 893 verwiesen. Derartige Dämpfer haben sich in der Praxis bewährt. Sie ermöglichen es, störende Geräusche im Bereich der Ladeluftleitung zu vermeiden. Die Dämpfer lassen sich in Ansauganlagen in Anpassung an den vorhandenen Bauraum fertigen. Für die Dämpfer steht jedoch nicht immer ausreichend Platz zur Verfügung, die erforderlichen Volumina für die Gestaltung der Schalldämpfer sind häufig nicht ausreichend. Es wird daher angestrebt, die Dämpfer möglichst klein und in möglichst optimaler Anpassung an vorhandene Zwischenräume zwischen anderen Bauteilen des Verbrennungsmotors auszubilden.

Aus der EP 761413 B1 ist ein Verfahren zur Herstellung eines Dämpfers aus Kunststoff durch Extrusionsblasen bekannt. Dabei wird ein Vorformling zunächst in einer offenen Form extrudiert. Sodann nach Schließen der Form ein Teil der Form an einer Stelle, an der ein Zubehör geformt werden soll, geöffnet und zunächst in einem ersten Blasschritt eine Erweiterung des Vorformlings an der Stelle, an der die Form geöffnet ist, gebildet. Es wird dann der zuvor geöffnete Teil der Form durch ein anderes Formstück, das der Erweiterung angepasst ist, geschlossen und ein zweiter Blasvorgang durchgeführt, wodurch die endgültige Form erreicht wird.

Die EP 701 083 B1 beschreibt einen Anschlussschlauch mit einer an dieser seitlich angesetzten Kammer. Sie beschreibt weiterhin ein Verfahren zum Herstellen eines derartigen Bauteils aus Anschlussschlauch und Kammer.

Aus der DE 69 604 195 T3 ist ein Verfahren zur Herstellung eines Schalldämpfers bekannt, bei dem ein erster Teil des Gehäuses aus Kunststoff und ein zweites Teil des Gehäuses aus Kunststoff hergestellt werden und diese beiden Teile anschließend miteinander verbunden werden. Ein Blasvorgang findet nicht statt.

Dämpfer der eingangs genannten Art werden im Wesentlichen für Verbrennungsmotororen mit Turboladern eingesetzt. Diese Verbrennungsmotoren haben einen relativ kleinen Hubraum und damit auch kleinere Abmessungen. Die kleineren Abmessungen führen zu kleineren Bauräumen für die einzelnen Teile, beispielsweise auch für die Dämpfer. Der für die Schalldämmung zur Verfügung stehende Platz ist daher gering.

Die vom Verbrennungsmotor abgegebenen Betriebsgeräusche sollen vorgegebenen Anforderungen entsprechen. Es wird ein möglichst guter Klang des Motors gewünscht. Bei turbogeladenen Motoren treten Geräusche u.a. durch die Zerteilung der Ladeluft innerhalb eines Turboladers auf. Weitere Geräusche kommen hinzu. Gedämmt werden sollen insbesondere solche Geräusche, die im menschlichen Hörbereich liegen. Es soll eine gewünschte, für den Verbrennungsmotor und das Auto günstige Geräuschemission erreicht werden. Dabei fordern die Motorenentwickler zunehmend Schallminderung in weiten Frequenzbereichen.

Für die Herstellung derartiger Dämpfer, z.B. des Dämpfers nach der DE 198 55 708 B4, wird heute u.a. ein Innenhochdruckverfahren, sogenanntes Hydroforming, eingesetzt. Auf diese Weise können Außenmäntel mit ein oder mehreren Volumenkammern in Blech gefertigt werden. Diese Außenmäntel müssen jedoch noch mit weiteren Bauteilen verbunden werden, beispielsweise geschweißt oder gelötet werden, um einen kompletten Dämpfer zu erhalten. Zudem muss noch eine Dichtheitsprüfung erfolgen.

Hiervon ausgehend ist es Aufgabe der Erfindung, einen Dämpfer vollständig in einem Arbeitsgang herzustellen, ohne dass nachträgliche Fügemaßnahmen notwendig sind. Dabei sollen mehrere Volumenkammern erstellt werden können. Es soll auch möglich sein, den Dämpfer mit ein- oder beidseitig angeordneten Anschlussstutzen zu fertigen und den Dämpfer auch ggf. mit zumindest an einer Seite des Dämpfers angeschlossenem Schlauch zu erstellen.

Diese Aufgabe wird gelöst durch ein Verfahren nach dem Anspruch 1, sie wird weiterhin gelöst durch eine Vorrichtung zur Herstellung eines derartigen Dämpfers nach dem Anspruch 10.

Dieser Dämpfer ist aus einem geeigneten Kunststoff hergestellt. Die Herstellung erfolgt durch Blasformen. Dadurch ist es möglich, in einem Arbeitsgang einen Außenmantel zu formen und mit einem Innenteil zu verbinden. Die Verbindung lässt sich dicht ausgestalten, so dass eine Prüfung auf Dichtigkeit entfallen kann. Die Blastechnologie ermöglicht vielfältige Designvarianten des Dämpfers. Es entfallen kostenintensive Schweiß- oder Lötverbindungen. Es ist eine erhebliche Gewichtseinsparung und damit auch ein reduzierter CO2-Ausstoß erreichbar. Insgesamt ist eine spürbare Kostenreduktion möglich.

Der Dämpfer eignet sich insbesondere für Schläuche und Leitungen, die direkt am Stutzen des Verdichtergehäuses des Turboladers oder in der Luftstrecke mit einem Dämpfer als Integrationsbauteil ausgestattet sind. Das Herstellungsverfahren erlaubt es, in einem Arbeitsgang ein akustisch abgestimmtes System zu fertigen, das einen Dämpfer und ggf. Anschlußstutzen, ggf. auch einen Schlauch, aufweist und je nach Einbausituation im Fahrzeug entsprechend abgestimmt werden kann.

Die Reihenfolge der einzelnen Verfahrensschritte ist nicht zwingend. Insbesondere kann die Reihenfolge der ersten beiden Verfahrensschritte des Anspruchs 1 geändert werden. Bei dem Schritt des Aufbringens des temperierten Vorformlings über das temperierte Innenteil wird jeglicher Kontakt zwischen Vorformling und Innenteil vermieden. Es bleibt ein Luftspalt zwischen den beiden Teilen bestehen. Dadurch wird vermieden, dass eine ungewollte Verbindung zwischen Innenteil und Vorformling auftritt.

Der Vorformling wird so temperiert, dass ein Blasvorgang stattfinden kann. Die hierzu notwendigen Temperaturen sind abhängig vom verwendeten Kunststoff. Das Innenteil wird so ausreichend erwärmt und der Vorformling hat eine derartige Temperatur, dass bei dem Schritt des Andrückens von Vorformling und Innenteil gegeneinander eine sichere Verbindung, insbesondere Verschweißung, erreicht wird. Vorzugsweise sind Vorformling und Innenteil aus demselben Kunststoff hergestellt. Verwendet werden hochbelastbare Kunststoffe, wie sie bereits nach dem Stand der Technik für Dämpfer verwendet werden.

In einer bevorzugten Weiterbildung wird bei dem Schritt des Erstellens des schlauchförmigen Vorformlings für den Außenmantel zugleich auch und einstückig mit diesem Vorformling ein Vorformteil für einen Anschlussschlauch hergestellt. Dieses Vorformteil bleibt außerhalb der Blasform. Für das Vorformteil kann eine eigene Form vorgesehen sein, die ebenfalls als eine Blasform ausgestaltet ist und im Folgenden als untere Blasform bezeichnet wird. Dabei wird ein Blasvorgang in der unteren Blasform durchgeführt, um den Anschlussschlauch zu erhalten. Die beiden Blasvorgänge werden bevorzugt gemeinsam durchgeführt. Die Formhohlräume beider Blasformen sind bevorzugt miteinander verbunden.

Das Vorformteil kann vorteilhafterweise vor einem derartigen Blasschritt so verformt werden, dass seine Achslinie eine beliebige Gestalt annimmt, beispielsweise Krümmungen aufweist, einen S-Verlauf hat oder dergleichen. Auf diese Weise lässt sich in einem einzigen Arbeitsschritt ein Dämpfer mit Anschlussschlauch an einer Seite, ggf. auch mit Anschlussschläuchen an beiden Enden des Dämpfers, herstellen.

Zum Stand der Technik allgemein wird auf das DE-Buch der Autoren Michael Thielen, Klaus Hartwig und Peter Gust "Blasformen von Kunststoff-Hohlkörpern", Hanser-Verlag 2006, verwiesen.

Weitere Vorteile und Merkmale der Erfindung ergeben sich aus den übrigen Ansprüchen sowie der nun folgenden Beschreibung von zwei nicht einschränkend zu verstehenden Ausführungsbeispielen der Erfindung, die im Folgenden unter Bezugnahme auf die Zeichnung näher erläutert werden. In dieser Zeichnung zeigen:
- Fig. 1:: ein prinzipielles Schnittbild durch eine Extrusionsdüse für das Erstellen eines Vorformlings, gegebenenfalls zusammen mit einem Vorformteil,
- Fig. 2:: eine Seitenansicht einer geöffneten Blasform mit Blasdorn und aufgebrachtem Innenteil in Prinzipdarstellung, die Darstellung ist rechts einer Achslinie als Schnittbild ausgeführt,
- Fig. 3:: eine Darstellung wie Figur 2, jedoch nun zusätzlich mit eingebrachtem Vorformling,
- Fig. 4:: das Detail X aus Figur 3 in vergrößerter Darstellung,
- Fig. 5:: eine Darstellung wie Figur 2, jedoch nun bei geschlossener Blasform,
- Fig. 6:: das Detail Y in vergrößerter Darstellung aus Figur 5,
- Fig. 7:: eine Darstellung wie Figur 2, jedoch nun bei geöffneter Blasform,
- Fig. 8:: eine Seitenansicht eines fertigen Dämpfers, die Seitenansicht ist rechts einer Achslinie als Schnitt ausgeführt,
- Fig. 9:: eine Darstellung wie Figur 2, jedoch mit zusätzlicher Darstellung eines beweglichen Unterwerkzeugs und zur Herstellung eines Dämpfers mit Anschlussschlauch gemäß einem zweiten Ausführungsbeispiel,
- Fig. 10:: eine Darstellung entsprechend Figur 3 für das zweite Ausführungsbeispiel mit der Blasform gemäß Figur 9,
- Fig. 11:: eine Darstellung wie Figur 9, nun in geschlossenem Zustand der Blasform,
- Fig. 12:: eine Darstellung wie Figur 11, nunmehr ist das Vorformteil für den Anschlussschlauch verformt,
- Fig. 13:: eine Darstellung wie Figur 12, nunmehr ist eine untere Blasform hinzugekommen, gezeigt ist der Zustand während des Aufblasens von Vorformling und Vorformteil für den Anschlussschlauch,
- Fig. 14:: eine Seitenansicht des fertigen Bauteils aus Dämpfer und Anschlussschlauch, wiederum rechts einer Achslinie als Schnittteil dargestellt und
- Fig. 15:: das Bauteil gemäß Figur 14 nach Entfernen der Butzen.

Bei der Herstellung eines Dämpfers werden zunächst ein Innenteil 20 und ein Vorformling 22 hergestellt. Für beide wird das gleiche Kunststoffmaterial verwendet. Das Innenteil 20 ist im Wesentlichen rohrförmig, es hat Durchlässe 24. Es kann in einem beliebigen Fertigungsverfahren, beispielsweise Spritzgießen, hergestellt werden. Es wird auf eine Temperatur gebracht, bei der es noch eine mechanische Festigkeit aufweist und als Bauteil gehandhabt werden kann. Diese Temperatur ist so hoch gewählt, dass bei Andrücken des Innenteils 20 an den ebenfalls temperierten Vorformling 22 ein Schweißvorgang stattfindet.

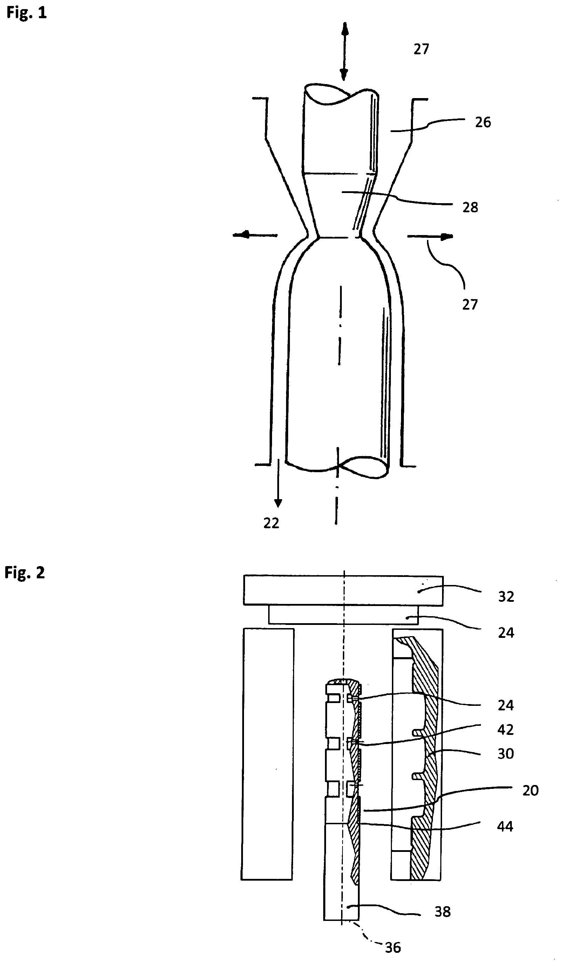

Der Vorformling 22 wird in bekannter Weise im Extrusionsverfahren aus einem Kunststoff hergestellt. Dies erfolgt in einer Vorrichtung, wie sie beispielhaft in Figur 1 schematisch dargestellt ist. Dabei wird vertikal von oben in einen Fließkanal 26 der schmelzflüssige Kunststoff eingepresst. Innerhalb des Fließkanals 26 befindet sich ein Dorn 28, dessen Position sowohl in horizontaler Richtung als auch in vertikaler Richtung verändert werden kann, siehe Pfeile 27. Bei einer Veränderung der Position des Dorns 28 in vertikaler Richtung wird der Ringspalt rings um den Dorn 28 herum vergrößert oder verkleinert, dadurch wird die Wanddicke des Vorformlings 22 verändert. Wird der Dorn 28 horizontaler Richtung bewegt, können Vorformlinge 22 mit einer über den Umfang ungleichmäßig verteilten Wanddicke erhalten werden. Der Außendurchmesser des Vorformlings 22 wird durch das Maß D bestimmt. Das Maß d steht für die lokale Wandstärke des Vorformlings 22. Die Erstellung des Vorformlings 22 ist an sich bekannt, zur Offenbarung wird auf das eingangs erwähnte DE-Buch Blasformen von Kunststoff-Hohlkörpern verwiesen.

Figur 2 zeigt eine Blasform 30, wie sie in ähnlicher Ausführung aus dem bereits genannten Buch ersichtlich ist. Die gezeigte Blasform hat zwei Formhälften. Es können auch Blasformen mit mehr als zwei Formhälften eingesetzt werden. Oberhalb der Blasform 30 befindet sich ein Speicherkopf 32, der der Herstellung des Vorformlings 22 dient, darunter befindet sich die aus Figur 1 ersichtliche Düse 34, die verstellbar ist. Die Blasform 30 hat eine zentrale Achse 36. Von unten ist in die Blasform ein Blasdorn 38 eingeführt. Er hat Luftkanäle 40, die auf dem zylindrischen Außenmantel des Blasdorns 38 in Austrittsöffnungen 42 münden. Über den Blasdorn 38 ist in dem in Figur 2 gezeigten Zustand bereits das Innenteil 20 aufgebracht. Der Blasdorn hat einen Anschlag 44, der untere Endbereich des Innenteils 20 ist mit diesem Anschlag 44 in Kontakt. In diesem Zustand befinden sich die Durchlässe 24 des Innenteils 20 oberhalb von Austrittsöffnungen 42. Dadurch kann Blasluft durch sie in den Forminnenhohlraum strömen. Der Forminnenhohlraum ist so ausgestaltet, dass er die spätere Außengestaltung des zu erstellenden Dämpfers wiedergibt. Konkret hat die Blasform 30 drei Kammern für die Ausbildung von drei Volumenkammern 45 des zu erstellenden Dämpfers. Diese kommunizieren jeweils über Durchlässe 24 mit dem Innenraum des Innenteils 20.

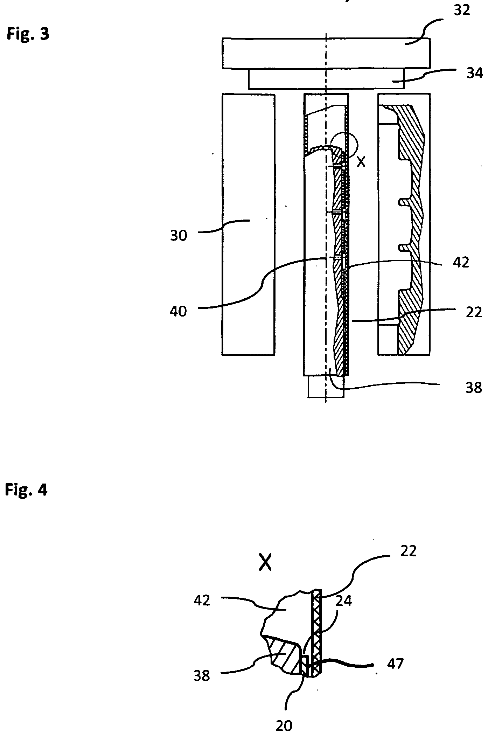

Im Zustand nach Figur 3 ist zusätzlich zu Figur 2 der Vorformling 22 erstellt und dabei über das temperierte Innenteil 20 gebracht worden. Das Innenteil 20 befindet sich innerhalb des Vorformlings 22. Das Detail X zeigt, dass zwischen Innenteil 20 und Vorformling 22 ein geringer Spalt 47 aufrechterhalten bleibt.

Durch diesen Spalt 47 soll erreicht werden, dass ein Kontakt zwischen Innenteil 20 und Vorformling 22 nicht stattfindet und es insbesondere nicht zu einer lokalen Verschweißung kommt und/oder das Aufbringen des Vorformlings 22 in Axialrichtung über das Innenteil 20 behindert wird. Die Temperaturen von Innenteil 20 und Vorformling 22 werden so eingestellt, dass ein Kontakt zwischen beiden möglichst noch nicht zu einer Verschweißung 49führt. Eine Verschweißung soll erst auftreten, wenn beide Teile zusammengepresst werden.

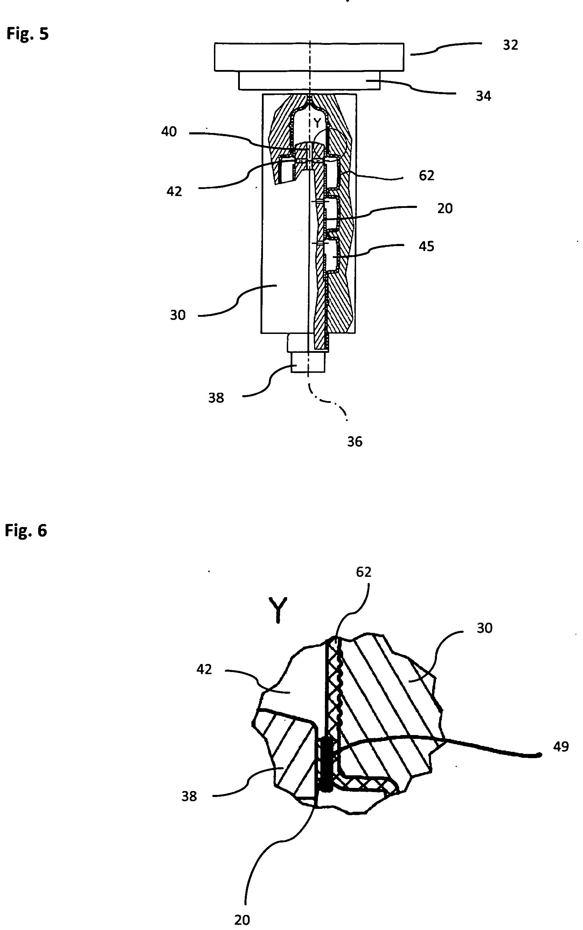

Figur 4 zeigt nun den Zustand, indem die Blasform 30 geschlossen ist. Beim Schließen der Form wird der Vorformling 22 oben zusammengedrückt, so dass dort aus dem Vorformling 22 keine Luft entweichen kann. Beim Schließen der Form wird der Vorformling 22 im unteren Bereich, unterhalb der späteren Volumenkammern, gegen das Innenteil 20 gedrückt, so dass auch dort eine dichte Verbindung erreicht wird. Dadurch ist der Vorformling 22 hermetisch abgeschlossen. Es kann nun der Aufblasvorgang erfolgen. Beim Aufblasen wird das in Figur 5 gezeigte Ergebnis erreicht, der Vorformling 22 wird gegen die Wände der Form gedrückt. Gleichzeitig wird der Vorformling 22 bereichsweise gegen das Innenteil 20 gedrückt, dies erfolgt vorzugsweise mechanisch. Es werden lokale Verbindungen zwischen Innenteil 20 und Vorformling 22 erreicht. Diese lokalen Verbindungen sind vorzugsweise ringförmig. Es befinden sich lokale, ringförmige Verbindungen zwischen benachbarten Volumenkammern 45.

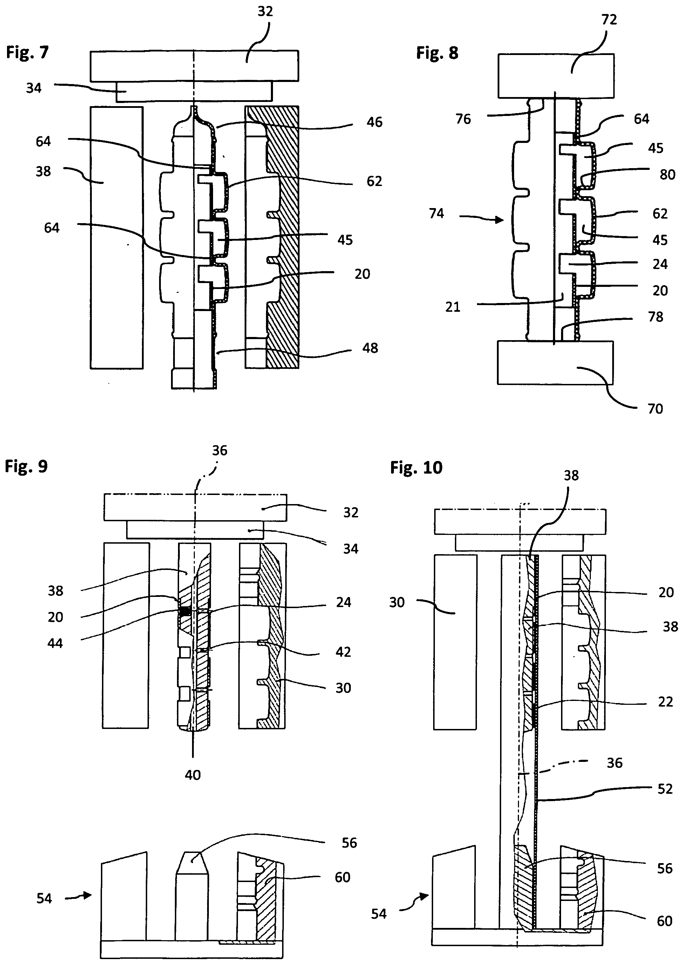

Es kann nun die Blasform 30 geöffnet werden, Figur 7 zeigt den entsprechenden Zustand. Es ist zu erkennen, dass ein Dämpfer 74 hergestellt ist. Es müssen jedoch noch ein oberer Butzen 46, auch Abquetschbutzen genannt, und ein unterer Butzen 48, der ebenfalls ein Abquetschbutzen ist, entfernt werden, um das fertige Bauteil Dämpfer 74 zu erhalten, wie es in Figur 8 dargestellt ist.

Die Figuren 9 bis 15 zeigen das zweite Ausführungsbeispiel. Es unterscheidet sich hinsichtlich der Herstellung des eigentlichen Dämpfers 74 nicht vom ersten Ausführungsbeispiel. Der Unterschied liegt jedoch darin, dass nun ein Bauteil hergestellt wird, das sich aus einem Dämpfer 74 gemäß dem ersten Ausführungsbeispiel und einem einstückig damit verbundenen Anschlussschlauch 50 zusammensetzt. Im Unterschied zum ersten Ausführungsbeispiel wird nicht nur der schlauchförmige Vorformling 22 des Außenmantels 62 in der Düse 34 hergestellt, sondern sogleich und im gezeigten Ausführungsbeispiel vorab ein Vorformteil 52 für den Anschluss schlauch 50. Beide hängen einstückig zusammen. Im Gegensatz zum ersten Ausführungsbeispiel kann der Blasdorn 38 nun nicht mehr von unten, sondern nur noch von oben in die Blasform 30 eingebracht werden. Dabei kann ein fester Anschlag 44, wie er im ersten Ausführungsbeispiel vorgesehen ist, stören. Figur 9 zeigt daher eine zweite Ausführungsmöglichkeit für einen Anschlag 44. Im Blasdorn 38 ist ein federndes Element vorgesehen, das nach außen elastisch vorbelastet ist, es ist beispielsweise als Kugel ausgeführt, die von einer radialen Feder nach außen gegen einen Sitz gedrückt wird und nach außen vorsteht. Dieser Anschlag44 wirkt nun mit einem der Durchlässe 24 zusammen, wie Figur 9 zeigt.

Figur 9 zeigt noch im Unterschied zum ersten Ausführungsbeispiel ein bewegliches Unterwerkzeug 54, es ist im offenen Zustand gezeigt. Es ist zweiteilig, es hat einen Formraum für die Ausbildung eines Endbereichs eines Anschlussschlauchs 50. Es hat weiterhin eine Aufnahme 56 für das Vorformteil 52.

Figur 10 zeigt nun entsprechend Figur 3 den Zustand, in dem das Vorformteil 52 und darüber der Vorformling 22 erstellt sind und sich der Vorformling 22 über dem Innenteil 20 befindet. Das Vorformteil 52 befindet sich unterhalb der oberen Blasform 30 und hat mit seinem unteren Ende die Aufnahme 56 übergriffen.

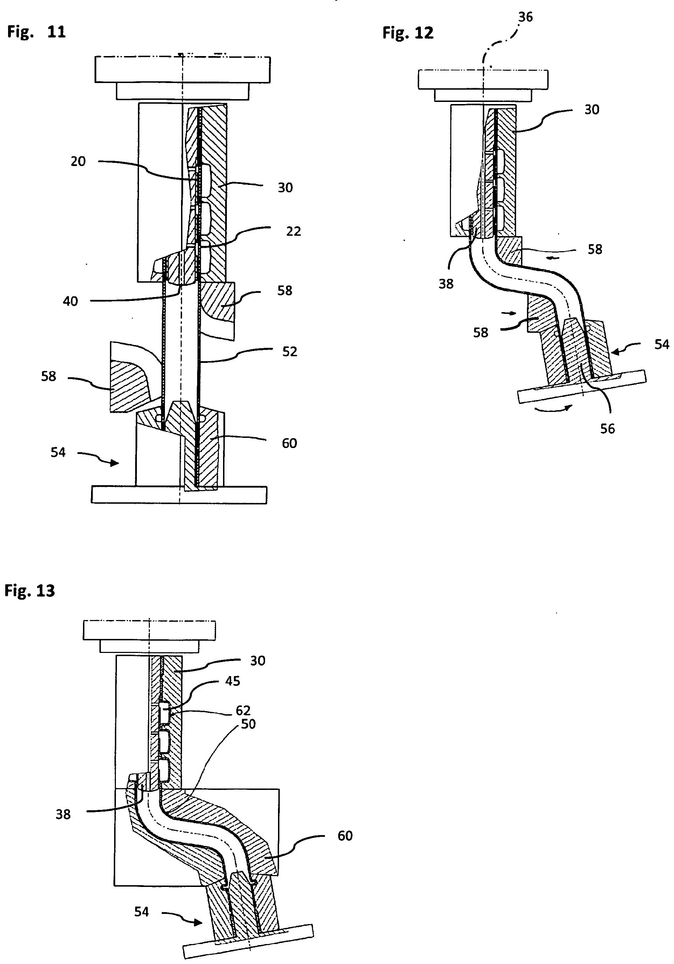

Nun wird die Form geschlossen, wie dies Figur 11 zeigt. Es erfolgt vor dem Schritt des Blasens zunächst eine Formgebung des Vorformteils 52 in eine Form, die weitgehend der Form des späteren Anschlussschlauchs 50 entspricht. Hierzu wird zunächst, wie Figur 12 zeigt, das Vorformteil 52 verbogen, so dass seine Achse 36 nicht mehr geradlinig ist. Die gezeigte Verbiegung ist im Wesentlichen S-förmig. Sie wird durch bewegliche Formteile 58 unterstützt. Diese werden in Richtung der eingezeichneten Pfeile 27 bewegt. Es wird das Unterwerkzeug 54 im Wesentlichen seitlich verschoben, siehe Pfeil 27.

In der Darstellung nach Figur 13 sind die beweglichen Formteile 58 entfernt, stattdessen ist eine untere Blasform 60 um das Vorformteil 52 angebracht, die sich zwischen der oberen Blasform 30 und dem Unterwerkzeug 54 erstreckt. In dem Zustand wie er nun vorliegt, kann der Schritt des Blasens erfolgen. Es wird dabei nicht nur in der Blasform 30 der Dämpfer 74 erstellt, sondern es wird zugleich auch das Vorformteil 52 gegen die untere Blasform 60 gedrückt, so dass dort der Anschlussschlauch 50 ausgebildet wird.

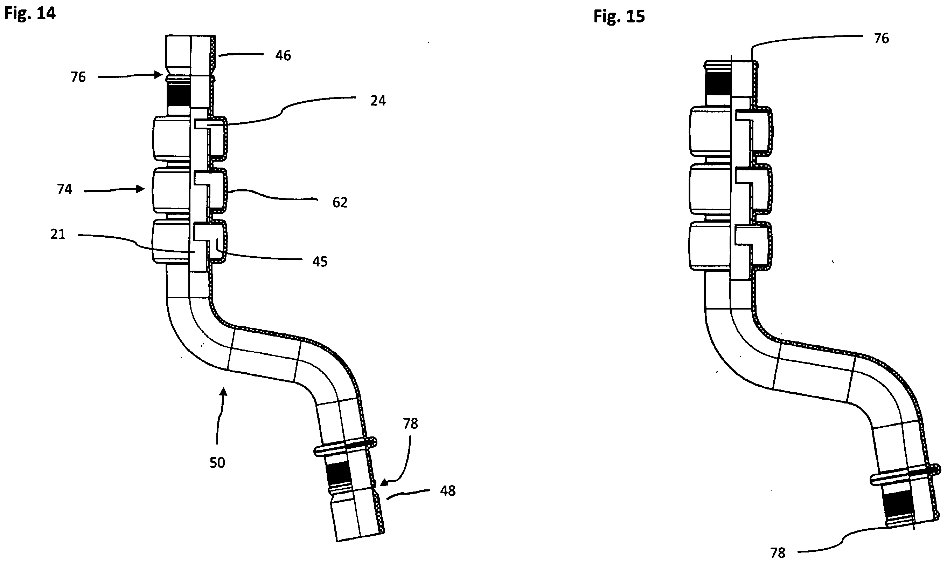

Figur 14 zeigt das Bauteil, das sich aus einem Dämpfer und einstückig damit verbundenem Anschlussschlauch 50 auf der Unterseite des Dämpfers 74 zusammensetzt. Dieses Rohteil hat noch Butzen 46, 48, die in bekannter Weise abgetrennt werden. Das fertige Bauteil zeigt Figur 15.

## Patentansprüche

1. Verfahren zum Herstellen eines Dämpfers (74) für eine Luftleitung eines Verbrennungsmotors (70), insbesondere für eine Ladeluftleitung eines Verbrennungsmotors (70) mit Turbolader (72), mit den folgenden Verfahrensschritten:
- Herstellen und Bereitstellen eines temperierten Innenteils (20), das Durchlässe (24) aufweist,
- Erstellen eines schlauchförmigen Vorformlings (22) eines Außenmantels (62) aus einer thermoplastischen Schmelze,
- Aufbringen des temperierten Innenteils (20) auf einen Blasdorn (38) einer Blasform (30), die geöffnet ist, wobei der Blasdorn (38) Luftkanäle (40) aufweist, die in Austrittsöffnungen (42) des Blasdorns (38) münden und die Durchlässe (24) über den Austrittsöffnungen (42) positioniert werden,
- Aufbringen des temperierten Vorformlings (22) über das Innenteil (20),
- Schließen der Blasform (30) und Aufblasen des Vorformlings (22) gegen die Wände der Blasform (30), wodurch ein Außenmantel (62) erhalten wird und stellenweises Andrücken von Vorformling (22) und Innenteil (20) gegeneinander entlang von Verbindungsbereichen (64), um lokale Verbindungen zwischen Innenteil (20) und Außenmantel (62) zu erhalten, und
- Öffnen der Blasform (30) und Entfernen des Dämpfers (74), wobei
- Vorformling (22) und Innenteil (20) auf eine Temperatur von mindestens 100°C gebracht werden, bevor das Blasen und Andrücken durchgeführt wird.

2. Verfahren nach Anspruch 1, **dadurch gekennzeichnet, dass** Vorformling (22) und Innenteil (20) auf eine Temperatur von mindestens 130°C gebracht werden, bevor das Blasen und Andrücken durchgeführt wird.

3. Verfahren nach Anspruch 1 oder 2, **dadurch gekennzeichnet, dass** bei dem Schritt des Aufbringens des Vorformlings (22) über das Innenteil (20) ein Abstand zwischen Innenteil (20) und Vorformling (22) zumindest außerhalb der Verbindungsbereiche (64) eingehalten wird.

4. Verfahren nach einem der vorangegangenen Ansprüche, **dadurch gekennzeichnet, dass** sich Verbindungsbereiche (64) zwischen benachbarten Volumenkammern (45) befinden und ringförmig um die Achse (36) verlaufen.

5. Verfahren nach einem der vorangegangenen Ansprüche, **dadurch gekennzeichnet, dass** zugleich mit dem Herstellen des schlauchförmigen Vorformlings (22) für den Außenmantel (62) ein Vorformteil (52) für die Herstellung eines Anschlussschlauchs (50) hergestellt wird, wobei vorzugsweise der Vorformling (22) und das Vorformteil (52) einstückig miteinander zusammenhängen.

6. Dämpfer (74), hergestellt mittels des Verfahrens nach einem der vorangegangenen Ansprüche, wobei der Dämpfer (74) insbesondere hinter dem Turbolader (72) anordnenbar ist, mit einem Einlass (76) und einem Auslass (78), mit einem Außenmantel (62), der sich zwischen Einlass (76) und Auslass (78) erstreckt, mit einem Innenteil (20), das sich innerhalb des Außenmantels (62) befindet, einen Innenraum (21) begrenzt, Durchlässe (24) aufweist und mit dem Außenmantel (62) verbunden ist, und mit mindestens einer Volumenkammer (45), die vom Außenmantel (62) und vom Innenteil (20) begrenzt ist und über mindestens einen der Durchlässe (24) mit dem Innenraum (21) kommuniziert, wobei Außenmantel (62) und Innenteil (20) aus thermoplastischem Kunststoff bestehen und der Außenmantel (62) ein Blasformteil ist, und wobei mehrere Volumenkammern (45) vorgesehen sind, jede Volumenkammer (45) zwei axiale Kammerwände (80) aufweist, die im Wesentlichen rechtwinklig zu einer Achse (36) verlaufen, und eine Kammerwand (80) jeweils nur eine Volumenkammer (45) begrenzt.

7. Dämpfer (74) nach Anspruch 6, **dadurch gekennzeichnet, dass** Außenmantel (62) und Innenteil (20) aus demselben thermoplastischem Kunststoff bestehen.

8. Dämpfer (74) nach einem der vorangegangenen Ansprüche 6 oder 7, **dadurch gekennzeichnet, dass** Außenmantel (62) und/oder Innenteil (20) einstückige Bauteile sind.

9. Dämpfer (74) nach einem der vorangegangenen Ansprüche 6 bis 8, **dadurch gekennzeichnet, dass** der Außenmantel (62) einstückig mit einem Anschlussschlauch (50) verbunden ist.

10. Vorrichtung zur Herstellung eines Dämpfers (74) für eine Luftleitung eines Verbrennungsmotors (70), insbesondere Ladeluftleitung eines Verbrennungsmotors (70) mit Turbolader (72), die eine Blasform (30) aufweist, welche in einen geöffneten und in einen geschlossenen Zustand gebracht werden kann, wobei die Blasform (30) einen Blasdorn (38) aufweist, wobei der Blasdorn (38)
a) einen Anschlag (44) für ein Innenteil (20) des Dämpfers (74) und
b) Luftkanäle (40) und mit diesen verbundene Austrittsöffnungen (42) aufweist, und dass der Anschlag (44) so positioniert ist, dass bei auf dem Blasdorn (38) aufgebrachtem Innenteil (20) Durchlässe (24) des Innenteils (20) über den Austrittsöffnungen (42) positioniert sind.

11. Vorrichtung nach dem vorangegangenen Anspruch, **dadurch gekennzeichnet, dass** sie weiterhin ein Unterwerkzeug (54) und eine untere Blasform (60) aufweist, dass das Unterwerkzeug (54) gegenüber der oberen Blasform (30) beweglich angeordnet ist, und dass sich die untere Blasform (60) zwischen dem Unterwerkzeug (54) und der oberen Blasform (30) befindet.

## Claims

1. Method for producing a damper (74) for an air line of an internal combustion engine (70), in particular for a charge air line of an internal combustion engine (70) having a turbocharger (72), comprising the following method steps:
- producing and providing a tempered inner part (20) which has passages (24),
- creating a tubular preform (22) of an outer shell (62) from a thermoplastic melt,
- applying the tempered inner part (20) onto a blow mandrel (38) of a blow mold (30) which is open, wherein the blow mandrel (38) has air ducts (40) which open into outlet openings (42) of the blow mandrel (38), and the passages (24) are positioned over the outlet openings (42),
- applying the tempered preform (22) over the inner part (20),
- closing the blow mold (30) and inflating the preform (22) against the walls of the blow mold (30), by which means an outer shell (62) is obtained and a pressing of the preform (22) and the inner part (20) against each other in some places along connection areas (64) in order to obtain local connections between the inner part (20) and outer shell (62), and
- opening the blow mold (30) and removing the damper (74), wherein
- the preform (22) and the inner part (20) are brought to a temperature of at least 100°C before the blowing and pressing are carried out.

2. Method according to claim 1, **characterized in that** the preform (22) and the inner part (20) are brought to a temperature of at least 130°C before the blowing and pressing are carried out.

3. Method according to claim 1 or 2, **characterized in that** a spacing is maintained between the inner part (20) and the preform (22) at least outside of the connection areas (64) during the step of applying the preform (22) over the inner part (20).

4. Method according to one of the preceding claims, **characterized in that** the connection areas (64) are located between adjacent volume chambers (45) and extend in a ring shape about the axis (36).

5. Method according to one of the preceding claims, **characterized in that** simultaneously with the production of the tubular preform (22) for the outer shell (62), a preform part (52) is produced for producing a connection hose (50), wherein the preform (22) and the preform part (52) are preferably made as a single piece.

6. Damper (74), produced by means of the method according to one of the preceding claims, wherein the damper (74) may be arranged in particular behind the turbocharger (72), comprising an inlet (76) and an outlet (78), comprising an outer shell (62) which extends between the inlet (76) and the outlet (78), comprising an inner part (20) which is located inside of the outer shell (62), delimits an inner space (21), has passages (24), and is connected to the outer shell (62), and comprising at least one volume chamber (45) which is delimited by the outer shell (62) and by the inner part (20), and communicates with the inner space (21) via at least one of the passages (24), wherein the outer shell (62) and inner part (20) are made of thermoplastic plastic material, and the outer shell (62) is a blow molded part, and wherein multiple volume chambers (45) are provided, each volume chamber (45) having two axial chamber walls (80) which extend substantially at right angles to an axis (36), and a chamber wall (80) delimits only one volume chamber (45) in each case.

7. Damper (74) according to claim 6, **characterized in that** the outer shell (62) and the inner part (20) are made from the same thermoplastic plastic material.

8. Damper (74) according to one of the preceding claims 6 or 7, **characterized in that** the outer shell (62) and/or the inner part (20) are one-piece components.

9. Damper (74) according to one of the preceding claims 6 to 8, **characterized in that** the outer shell (62) is connected in one piece with the connection hose (50).

10. Device for producing a damper (74) for an air line of an internal combustion engine (70), in particular for a charge air line of an internal combustion engine (70) having a turbocharger (72), which has an air mold (30) which may be brought into an opened and into a closed state, wherein the blow mold (30) has a blow mandrel (38), wherein the blow mandrel (38) has
a) a stop (44) for an inner part (20) of the damper (74) and
b) air ducts (40) and outlet openings (42) connected to the same, and the stop (44) is positioned so that when the inner part (20) is applied on the blow mandrel (38), passages (24) of the inner part (20) are positioned over the outlet openings (42).

11. Device according to one of the preceding claims, **characterized in that** it furthermore has a lower tool (54) and a lower blow mold (60), that the lower tool (54) is arranged to be movable with respect to the upper blow mold (30), and that the lower blow mold (60) is located between the lower tool (54) and the upper blow mold (30).

## Revendications

1. Procédé de fabrication d'un amortisseur (74) pour une conduite d'air d'un moteur à combustion (70), en particulier pour une conduite d'air de charge d'un moteur à combustion (70) doté d'un turbocompresseur (72), comprenant les étapes opératoires suivantes :
- fabrication et mise à disposition d'une pièce intérieure (20) qui présente des passages (24),
- réalisation d'une ébauche de forme tubulaire (22) d'une chemise extérieure (62) à partir d'une coulée thermoplastique,
- application de la pièce intérieure tempérée (20) sur un mandrin de soufflage (38) d'un moule de soufflage (30) qui est ouvert, le mandrin de soufflage (38) présentant des canaux à air (40) qui débouchent dans des orifices de sortie (42) du mandrin de soufflage (38) et les passages (24) sont positionnés au-dessus des orifices de sortie (42),
- application de l'ébauche tempérée (22) au-dessus de la pièce intérieure (20),
- fermeture du moule de soufflage (30) et soufflage de l'ébauche (22) contre les parois du moule de soufflage (30), ce qui permet d'obtenir une chemise extérieure (62) et par endroits compression de l'ébauche (22) et de la pièce intérieure (20) l'une contre l'autre le long de zones de raccordement (64), afin d'obtenir des connexions locales entre la pièce intérieure (20) et la chemise extérieure (62), et
- ouverture du moule de soufflage (30) et retrait de l'amortisseur (74),
- l'ébauche (22) et la pièce intérieure (20) étant amenées à une température d'au moins 100 °C avant que le soufflage et la compression soient réalisés.

2. Procédé selon la revendication 1, **caractérisé en ce que** l'ébauche (22) et la pièce intérieure (20) sont amenées à une température d'au moins 130 °C avant que le soufflage et la compression soient réalisés.

3. Procédé selon la revendication 1 ou 2, **caractérisé en ce que**, dans l'étape d'application de l'ébauche (22) au-dessus de la pièce intérieure (20), une distance entre la pièce intérieure (20) et l'ébauche (22) est maintenue du moins à l'extérieur des zones de raccordement (64).

4. Procédé selon une des revendications précédentes, **caractérisé en ce que** les zones de raccordement (64) se trouvent entre des chambres volumiques voisines (45) et passent suivant une forme annulaire autour de l'axe (36).

5. Procédé selon une des revendications précédentes, **caractérisé en ce que**, simultanément à la fabrication de l'ébauche de forme tubulaire (22) pour la chemise extérieure (62), une pièce ébauchée (52) est fabriquée pour la fabrication d'un tuyau de raccordement (50), l'ébauche (22) et la pièce ébauchée (52) étant de préférence réalisées ensemble en une pièce.

6. Amortisseur (74) fabriqué au moyen du procédé selon une des revendications précédentes, l'amortisseur (74) pouvant être en particulier disposé derrière le turbocompresseur (72) avec une entrée (76) et une sortie (78), avec une chemise extérieure (62) qui s'étend entre l'entrée (76) et la sortie (78), avec une pièce intérieure (20) qui se trouve dans la chemise extérieure (62), limite un espace intérieur (21), présente des passages (24) et est raccordé à la chemise extérieure (62), et avec au moins une chambre volumique (45) qui est limitée par la chemise extérieure (62) et par la pièce intérieure (20) et communique par au moins un des passages (24) avec l'espace intérieur (21), la chemise extérieure (62) et la pièce intérieure (20) étant composées de matière thermoplastique et la chemise extérieure (62) étant une pièce moulée soufflée, et plusieurs chambres volumiques (45) étant prévues, chaque chambre volumique (45) présentant deux parois de chambre axiales (80) qui s'étendent sensiblement orthogonalement par rapport à un axe (36), et une paroi de chambre (80) limitant respectivement seulement une chambre volumique (45).

7. Amortisseur (74) selon la revendication 6, **caractérisé en ce que** la chemise extérieure (62) et la pièce intérieure (20) sont composées de la même matière thermoplastique.

8. Amortisseur (74) selon une des revendications précédentes 6 ou 7, **caractérisé en ce que** la chemise extérieure (62) et/ou la pièce intérieure (20) sont des pièces monobloc.

9. Amortisseur (74) selon une des revendications précédentes 6 à 8, **caractérisé en ce que** la chemise intérieure (62) est raccordée en une pièce à un tuyau de raccordement (50),

10. Dispositif de fabrication d'un amortisseur (74) pour une conduite d'air d'un moteur à combustion (70), en particulier pour une conduite d'air de charge d'un moteur à combustion (70) doté d'un turbocompresseur (72) qui présente un moule de soufflage (30) qui peut être amené dans un état ouvert et dans un état fermé, le moule de soufflage (30) présentant un mandrin de soufflage (38), le mandrin de soufflage (38) présentant
a) une butée (44) pour une pièce intérieure (20) de l'amortisseur (74) et
b) des canaux à air (40) et des orifices de sortie (42) connectés à ceux-ci, et que la butée (44) est positionnée de manière à ce que, sur la pièce intérieure (20) appliquée sur le mandrin de soufflage (38), des passages (24) de la pièce intérieure (20) par les orifices de sortie (42) sont positionnés.

11. Dispositif selon la revendication précédente, **caractérisé en ce qu'**il présente en outre un outil inférieur (54) et un moule de soufflage inférieur (60), que l'outil inférieur (54) est disposé de manière mobile par rapport au moule de soufflage supérieur (30), et que le moule de soufflage inférieur (60) se trouve entre l'outil inférieur (54) et le moule de soufflage supérieur (30).
